# EUROPÄISCHE PATENTANMELDUNG

(11) **EP 4 678 004 A1**
(43) Veröffentlichungstag der Anmeldung: **14.01.2026**
(21) Anmeldenummer: 24187473.4
(22) Anmeldetag: 09.07.2024
(51) Int. Cl.: A21C 1/02, A21C 1/14, B01F 35/60, B01F 27/805, B01F 35/10

(54) **KNETMASCHINE MIT EIGENSICHEREM VERSCHWENKEN EINES TROPFSCHUTZES**

(71) Anmelder: DIOSNA Dierks & Söhne GmbH, 49086 Osnabrück (DE)
(72) Erfinder: HORNEY, Christoph, 49176 Hilter a.T.W. (DE); FISSMANN, Christian, 49080 Osnabrück (DE); BENSMANN, Stefan, 49078 Osnabrück (DE)
(74) Vertreter: Ege Lee & Roider Patentanwälte

(57) **Zusammenfassung**

Knetmaschine (1) für Nahrungsmittelteige aufweisend ein Unterteil (3) und ein Oberteil (2), wobei an dem Unterteil (3) ein Knetbottich (5) anordbar ist und ein Antrieb zur Drehung des Knetbottichs (5) befestigt ist, und wobei an dem Oberteil (2) ein Knetwerkzeug (15) und ein das Knetwerkzeug (15) antreibender Antrieb sowie ein Deckel (4) zum Verschließen des Knetbottichs (5) gehalten sind, und wobei die Knetmaschine (1) eine Tropfschutzvorrichtung (13) umfasst, die einen Tropfschutz (14) aufweist, der zwischen einer ein- und ausgeschwenkten Position mittels eines Schwenkantriebs (18) verschwenkbar ist, wobei sich in der eingeschwenkten Position der Tropfschutz (14) unterhalb der Knetwerkzeuge (15) befindet, derart, dass von dem Knetwerkzeug (15) herabtropfender Nahrungsmittelteig aufgefangen wird, wobei die Tropfschutzvorrichtung (13) eine Sicherheitskupplung (16) umfasst, die bei Überlast eine Antriebswelle (17) des Schwenkantriebs (18) von einer dem Tropfschutz (14) zugeordneten Abtriebswelle (19) trennt, so dass eine Drehmomentübertragung unterbrochen wird.

## Beschreibung

Die vorliegende Erfindung betrifft eine Knetmaschine für Nahrungsmittelteige mit einer Tropfschutzvorrichtung mit den Merkmalen des Oberbegriffs des Anspruchs 1, eine industrielle Teigproduktionsanlage zur Herstellung von Nahrungsmittelteigen sowie ein Verfahren zur Sicherung einer Bewegung eines Tropfschutzes einer Tropfschutzvorrichtung einer Knetmaschine.

Knetmaschinen für Teige, insbesondere Backteige, weisen einen Bottichwagen mit einem Knetbottich unterschiedlicher Größe für Teigmassen von 100 bis 1000 Kg auf, in den jeweils ein motorisch antreibbares Knetwerkzeug zur Durchführung des Knetvorganges einbringbar ist. Im Betrieb ist der Knetbottich von einem Deckel verschlossen. Nach Beendigung des Knetvorganges wird das Werkzeug herausgefahren und ein Tropfschutz in Form einer Auffangschale unter das Werkzeug gefahren, um ein Abtropfen von Teig z. B. auf den Boden zu verhindern.

Im Zuge der Automatisierung von industriellen Teigproduktionsanlagen werden sogenannte fahrerlose Transportfahrzeuge eingesetzt, die Bottichwägen zwischen den Stationen transportieren. Die Knetmaschinen müssen für den Einsatz von fahrerlosen Transportfahrzeugen zugänglich gemacht werden. Bediener oder Fahrer kommen nur noch bedingt zum Einsatz.

Es ist Aufgabe der vorliegenden Erfindung eine für fahrerlose Transportfahrzeuge zugängliche Knetmaschine für den Zugang einer Person sicherer zu machen.

Diese Aufgabe wird von einer Knetmaschine für Nahrungsmittelteige mit den Merkmalen des Anspruchs 1, einer industriellen Teigproduktionsanlage zur Herstellung von Nahrungsmittelteigen mit den Merkmalen des Anspruchs 6, und von einem Verfahren zur Bewegung eines Tropfschutzes einer Tropfschutzvorrichtung einer Knetmaschine mit den Merkmalen des Anspruchs 7 gelöst.

Demnach ist eine Knetmaschine für Nahrungsmittelteige aufweisend ein Unterteil und ein Oberteil, wobei an dem Unterteil ein Knetbottich anordbar und ein Antrieb zur Drehung des Knetbottichs befestigt ist, vorgesehen. An dem Oberteil sind ein Knetwerkzeug und ein das Knetwerkzeug antreibender Antrieb sowie ein Deckel zum Verschließen des Knetbottichs gehalten. Die Knetmaschine umfasst eine Tropfschutzvorrichtung, die einen Tropfschutz aufweist, der zwischen einer ein- und ausgeschwenkten Position mittels eines Schwenkantriebs verschwenkbar ist, wobei in der eingeschwenkten Position der Tropfschutz sich unterhalb der Knetwerkzeuge befindet, derart, dass von dem Knetwerkzeug herabtropfender Nahrungsmittelteig aufgefangen wird. Die Tropfschutzvorrichtung umfasst eine Sicherheitskupplung, die bei Überlast eine Antriebswelle des Schwenkabtriebs von einer dem Tropfschutz zugeordneten Abtriebswelle trennt, so dass eine Drehmomentübertragung unterbrochen wird.

Das Vorsehen einer Sicherheitskupplung schützt Bediener vor Verletzungen und erlaubt außerdem eine schnelle Bewegung des Tropfschutzes. Wodurch die Standzeiten der Bottichwägen in der Knetmaschine verkürzt werden können. Die Knetmaschine muss nicht zusätzlich vor Zugang geschützt werden, beispielsweise mit einem Schutzzaun, so dass fahrerlose Transportfahrzeuge ungehindert Bottichwägen zu der Knetmaschine transportieren können.

Vorzugsweise ist die Sicherheitskupplung eine Reibkupplung, die zuverlässig im Überlastfall eine Drehmomentübertragung verhindert.

Die Sicherheitskupplung umfasst bevorzugt einen Sensor, insbesondere einen induktiven Sensor, der den Überlastfall detektiert.

Bevorzugt ist der Tropfschutz um eine vertikale Achse verschwenkbar und die durch die Schwenkbewegung aufgespannte Ebene weist einen vertikalen Abstand von 10 mm bis 20 mm zu einer durch die Kante eines in der Knetmaschine befindlichen Knetbottichs aufgespannten Ebene auf. Dadurch kann die Knetmaschine besonders kompakt gehalten werden und das Herausbewegen des Knetwerkzeuges aus dem Knetbottich minimiert werden.

Der Tropfschutz ist bevorzugt ein ebenes Blech mit einem erhöhten Rand, so dass dieser sicher den herunter tropfenden Nahrungsmittelteig auffängt und einfach zu reinigen ist.

Der Knetbottich ist bevorzugt Teil eines Bottichwagens.

Es ist vorteilhaft, für die Entnahme des Knetbottich aus der Knetmaschine, wenn das Oberteil gegenüber dem Unterteil vertikal verfahrbar oder verschwenkbar ist.

Außerdem ist eine industrielle Teigproduktionsanlage zur Herstellung von Nahrungsmittelteigen mit wenigstens einer zuvor beschriebenen Knetmaschine sowie Bottichwägen und fahrerlosen Transportfahrzeugen vorgesehen. Die fahrerlosen Transportfahrzeuge transportieren die Bottichwägen zu den Knetmaschinen und nach dem Knetvorgang zu der nächsten Station, bevorzugt halb- oder vollautomatisch.

Zudem ist ein Verfahren zur Sicherung einer Bewegung eines Tropfschutzes einer Tropfschutzvorrichtung einer Knetmaschine für Nahrungsmittelteige vorgesehen. Die Knetmaschine ist vorzugsweise wie vorstehend beschrieben ausgebildet. Das Verfahren weist die folgenden Schritte auf:
a) Nach Beendigung eines Knetvorgangs Herausbewegen des Knetwerkzeugs aus dem Knetbottich und danach Einschwenken des Tropfschutzes unterhalb des Knetwerkzeuges, derart, dass von dem Knetwerkzeug herabtropfender Nahrungsmittelteig aufgefangen wird,
b) Entfernen des Bottichwagens aus der Knetmaschine,
c) Für den Fall das sich ein Hindernis im Schwenkbereich des Tropfschutzes beim Einschwenken befindet, Durchrutschen der Sicherheitskupplung und Unterbrechen der Drehmomentübertragung vom Schwenkantrieb auf den Tropfsch utz.

Es ergeben sich ich die oben genannten Vorteile. Ferner kann das Verfahren umfassen:
- Einbringen eines Bottichwagens in die Knetmaschine und danach Ausschwenken des Tropfschutzes aus dem Bereich des Bottichwagens heraus in eine Endposition, wobei in der Endposition der Tropfschutz seitlich neben dem Unterteil der Knetmaschine angeordnet ist.

Das Einbringen und Entfernen des Bottichwagens erfolgt bevorzugt mit einem fahrerlosen Transportmittel, insbesondere mit einem aktiven Lastaufnahmemittel, beispielsweise Gabelzinken.

Vorzugsweise erfolgt das Ein- und Ausschwenken des Tropfschutzes in einer horizontalen Ebene.

Der Überlastfall kann mittels Sensor detektiert werden, wobei dann im Überlastfall der Schwenkantrieb dazu angesteuert werden kann, die Drehrichtung umzukehren.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung einer Knetmaschine mit Bottichwagen mit ausgeschwenktem Tropfschutz,
- Figur 2:: eine Frontalansicht auf die Knetmaschine der Figur 1 mit herausgefahrenem Bottichwagen und eingeschwenktem Tropfschutz, sowie
- Figur 3:: eine räumliche Ansicht der Knetmaschine der Figur 2.

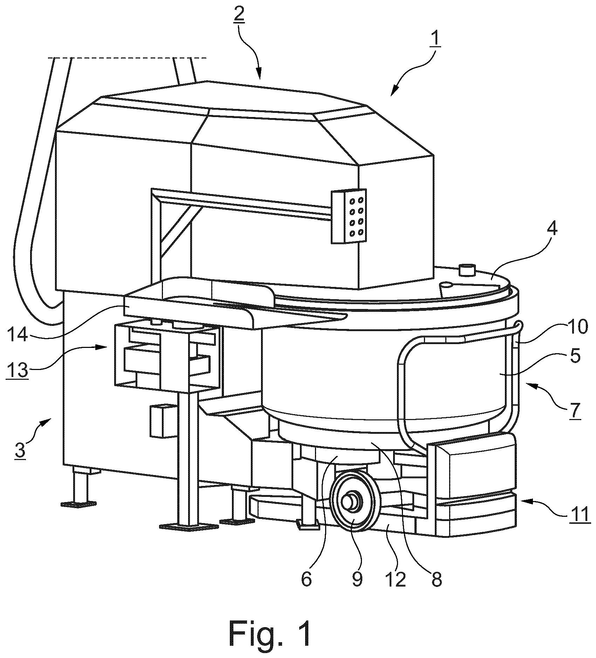

In der Figur 1 ist eine Knetmaschine 1 einer industriellen Teigproduktionsanlage dargestellt. In industriellen Teigproduktionsanlagen werden Nahrungsmittelteige für die Backindustrie industriell und halb- oder vollautomatisiert hergestellt. Die Knetmaschine 1 umfasst ein Oberteil 2 und ein Unterteil 3. Das Oberteil 2 trägt das nicht dargestellte Knetwerkzeug und den für eine Rotation des Knetwerkzeuges benötigten Antrieb, sowie einen Deckel 4, der zum Abdecken eines nach oben hin offenen Knetbottichs 5 vorgesehen ist. Im Unterteil 3 der Knetmaschine 1 ist eine Zangenverriegelung 6 und ein Antrieb zur Drehung des Knetbottichs angeordnet. Die Zangenverriegelung 6 fixiert die Position eines Bottichwagens 7 in der Knetmaschine 1. Der Bottichwagen 7 umfasst den (Edelstahl-)Knetbottich 5, der mit einer Welle verbunden ist. Auf der Welle sitzt drehfest unterhalb des Knetbottichs 5 eine Bottichscheibe 8, die mit einem Reibrad der Knetmaschine zum Drehen des Knetbottichs 5 in Wirkverbindung bringbar ist. Unterhalb der Bottichscheibe 8 ist die Welle von einer nicht ersichtlichen Nabenscheibe konzentrisch umgeben, die mit einem Untergestell des Bottichwagens 7 verbunden ist und somit ortsfest gehalten ist. Bei Rotation des Knetbottichs 5 dreht sich die Nabenscheibe nicht mit. An der Nabenscheibe greift die Zangenverriegelung 6 an. Das Untergestell des Bottichwagens 7 weist Räder 9, zum Verfahren des Bottichwagens 7 auf. Außerdem ist an dem Bottichwagen 7 ein Griff 10 zum manuellen Lenken durch einen Bediener vorgesehen. Rein schematisch ist ein Teil eines fahrerlosen Transportfahrzeugs 11 mit einem aktiven Lastaufnahmemittel 12 dargestellt, dass unter den Bottichwagen 7 gefahren ist.

In dem dargestellten Zustand der Knetmaschine 1 verschließt der Deckel 4 den Knetbottich 5 des Bottichwagens 7. Um von dem Knetwerkzeug herabtropfenden Teig aufzufangen ist eine Tropfschutzvorrichtung 13 mit einem Tropfschutz 14 in Form einer Auffangschale vorgesehen. Der Tropfschutz 14 ist ein ebenes Blech mit einem Rand. Er ist um eine vertikale Schwenkachse, die seitlich neben dem Unterteil 3 der Knetmaschine 1 liegt verschwenkbar zwischen einer eingeschwenkten Position und einer vollständig ausgeschwenkten Position verfahrbar. In der Figur 1 ist die vollständig ausgeschwenkte Position dargestellt. Der Tropfschutz 14 ist seitlich neben dem Bottichwagen positioniert, so dass der Bottichwagen ungehindert von einem fahrerlosen Transportfahrzeug in die Knetmaschine gefahren werden kann.

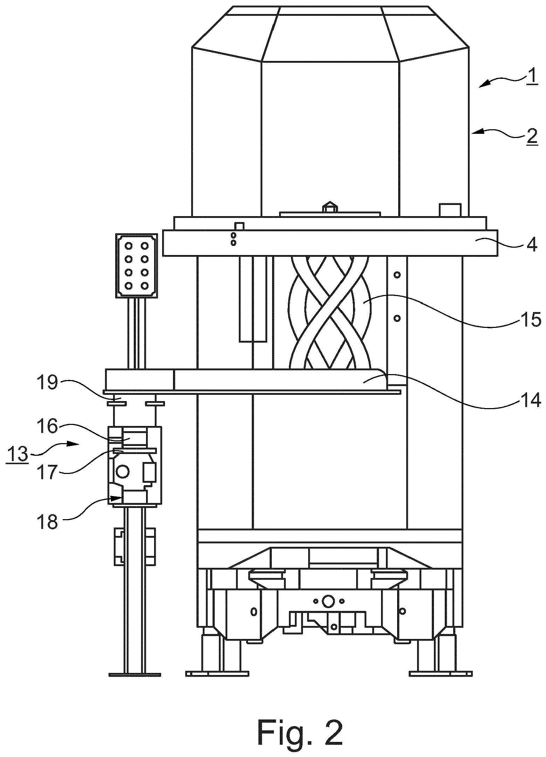

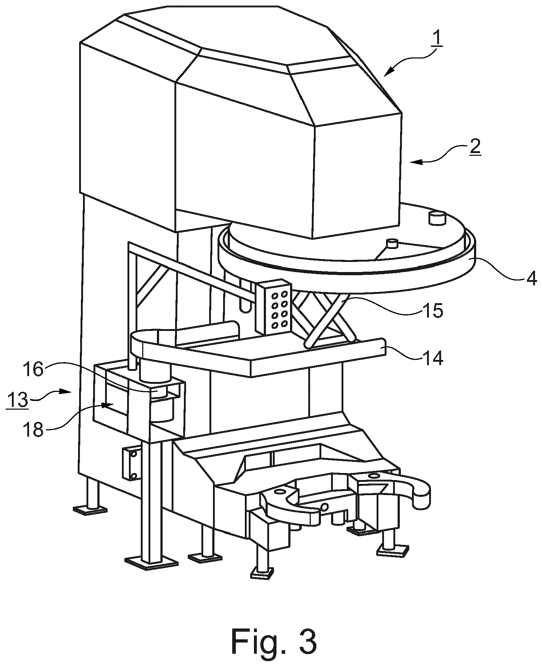

In den Figuren 2 und 3 ist die eingeschwenkte Position des Tropfschutzes 14 dargestellt. Das Oberteil 2 der Knetmaschine 1 ist entlang der Vertikalen linear nach oben mit dem Deckel und dem Knetwerkzeug 15 verfahren. Nach dem Ende des Knetvorgangs verfährt das Oberteil 2 nach oben und der Tropfschutz 14 wird unter das Werkzeug bis zur eingeschwenkten Position geschwenkt. Der Tropfschutz 14 ist derart angeordnet, dass beim Einschwenken ein Abstand zwischen der Unterseite des Tropfschutzes und dem Rand des Knetbottichs vorhanden ist, der in einem Bereich zwischen 10 mm und 20 mm liegt. Ein derart geringer Abstand birgt beim Ein- und Ausschwenken des Tropfschutzes die Gefahr, dass Gliedmaßen einer Person in den vorhandenen Spalt zwischen Tropfschutz und Knetbottich geraten und die ausgeübten Schwenkkräfte Verletzungen hervorrufen. Nach dem Einschwenken des Tropfschutzes wird der Bottichwagen von dem fahrerlosen Transportfahrzeug aus der Knetmaschine gefahren. Mittels des Tropfschutzes kann verhindert werden, dass weder der Boden unterhalb des Werkzeuges noch der Bottichwagen oder das fahrerlose Transportfahrzeug mit vom Werkzeug heruntertropfenden Teigs verunreinigt wird.

Um die Eigensicherheit der Knetmaschine 1 zu erhöhen, weist die Tropfschutzvorrichtung 13 eine Sicherheitskupplung 16, insbesondere eine Rutschkupplung auf. Die Rutschkupplung 16 wird zwischen einer Antriebswelle 17 eines Schwenkantriebs 18 und einer drehfest mit dem Tropfschutz 14 verbundenen Abtriebswelle 19 eingesetzt. Die Rutschkupplung trennt bei Überlast die Antriebswelle 17 von der Abtriebswelle 19, also wenn das übertragene Drehmoment eine zulässige Grenze überschreitet. Das hat zur Folge, dass der Tropfschutz 14 im Überlast-Fall nicht weiter verschwenkt wird.

Die Rutschkupplung 16 weist bevorzugt ein nicht dargestelltes Antriebsteil und ein Abtriebsteil auf. Das Antriebsteil ist drehfest mit der Antriebswelle 17 (Motorwelle) verbunden. Das Abtriebsteil ist drehfest mit der Abtriebswelle 19 verbunden. Die Drehmomentübertragung erfolgt durch schraubenförmige Kontaktflächen im Antriebs- und im Abtriebsteil, die durch Federkraft ineinander gepresst werden. Beim Erreichen eines eingestellten Grenzdrehmomentes reicht die Federkraft nicht mehr aus, um ein Verdrehen der Teile relativ zueinander über Zahnflanken der Eingriffe und Zähne entgegenzuwirken. Der Reibschluss wird aufgehoben und es kommt zu einem Durchrutschen, einem sogenannten Ratschen der Kupplung, wodurch der Kraftfluss zwischen den Teilen unterbrochen wird. Vorzugsweise behalten die Zahnflanken ihren Flächenkontakt auch während der Verdrehung beim Ausrastvorang. Das Grenzdrehmoment kann durch die Anzahl der aktiven Federn eingestellt werden.

Es ist auch denkbar, dass das Vorliegen von Überlast als Initiator eingesetzt wird, um die Drehrichtung des zum Ein- und Ausschwenken vorgesehenen Schwenkantriebs umzukehren. Dazu kann beispielsweise ein induktiver Grenztaster vorgesehen sein, der den Überlastfall detektiert und entsprechend an eine Steuereinheit weitergeben kann, die den Überlastfall signalisieren und/ oder eine Umkehr der Bewegung auslösen kann.

Der Vorteil einer Sicherheitskupplung mit optionalen Initiator liegt darin, dass die Bewegung des Tropfschutzes mit einer hohen Geschwindigkeit erfolgen kann, was einen klaren Zeitvorteil gegenüber einer langsamen Bewegung darstellt. Bei langsamen Bewegungen würde es hingegen keiner Sicherheitskupplung bedürfen, weil der Bediener auf einen Kontakt mit dem Tropfschutz reagieren könnte, ohne dass dieser verletzt werden würde.

Der Einsatz der vorstehend beschrieben Tropfschutzvorrichtung ist nicht auf Knetmaschinen mit linear verfahrbarem Oberteil beschränkt. Es ist u.a. auch denkbar, die Tropfschutzvorrichtung in Knetmaschinen mit verschwenkbarem Oberteil einzusetzen.

## Patentansprüche

1. Knetmaschine (1) für Nahrungsmittelteige aufweisend ein Unterteil (3) und ein Oberteil (2), wobei an dem Unterteil (3) ein Knetbottich (5) anordbar ist und ein Antrieb zur Drehung des Knetbottichs (5) befestigt ist, und wobei an dem Oberteil (2) ein Knetwerkzeug (15) und ein das Knetwerkzeug (15) antreibender Antrieb sowie ein Deckel (4) zum Verschließen des Knetbottichs (5) gehalten sind, und wobei die Knetmaschine (1) eine Tropfschutzvorrichtung (13) umfasst, die einen Tropfschutz (14) aufweist, der zwischen einer ein- und ausgeschwenkten Position mittels eines Schwenkantriebs (18) verschwenkbar ist, wobei sich in der eingeschwenkten Position der Tropfschutz (14) unterhalb der Knetwerkzeuge (15) befindet, derart, dass von dem Knetwerkzeug (15) herabtropfender Nahrungsmittelteig aufgefangen wird, **dadurch gekennzeichnet, dass** die Tropfschutzvorrichtung (13) eine Sicherheitskupplung (16) umfasst, die bei Überlast eine Antriebswelle (17) des Schwenkantriebs (18) von einer dem Tropfschutz (14) zugeordneten Abtriebswelle (19) trennt, so dass eine Drehmomentübertragung unterbrochen wird.

2. Knetmaschine nach Anspruch 1, **dadurch gekennzeichnet, dass** die Sicherheitskupplung (16) eine Reibkupplung ist.

3. Knetmaschine nach Anspruch 1 oder 2, **dadurch gekennzeichnet, dass** die Sicherheitskupplung (16) einen Sensor umfasst, der den Überlastfall detektiert.

4. Knetmaschine nach Anspruch 3, **dadurch gekennzeichnet, dass** der Sensor ein induktiver Sensor ist.

5. Knetmaschine nach einem der vorhergehenden Ansprüche, **dadurch gekennzeichnet, dass** der Tropfschutz (14) um eine vertikale Achse verschwenkbar ist und die durch die Schwenkbewegung aufgespannte Ebene einen vertikalen Abstand von 10 mm bis 20 mm zu einer durch die Kante eines in der Knetmaschine befindlichen Knetbottichs (5) aufgespannten Ebene hat.

6. Industriellen Teigproduktionsanlage zur Herstellung von Nahrungsmittelteigen mit wenigstens einer Knetmaschine (1) nach einem der vorhergehenden Ansprüche sowie Bottichwägen (7) und fahrerlosen Transportfahrzeugen (11), die dazu ausgebildet sind, die Bottichwägen (7) zu den Knetmaschinen (1) zu fahren und nach dem Knetvorgang zu der nächsten Station weiter zu transportieren.

7. Verfahren zur Sicherung einer Bewegung eines Tropfschutzes (14) einer Tropfschutzvorrichtung (13) einer Knetmaschine (1) für Nahrungsmittelteige, die Knetmaschine aufweisend einen Bottichwagen (7) mit Knetbottich (5) und ein Unterteil (3) und ein Oberteil (2), wobei an dem Unterteil (3) ein Antrieb zur Drehung des Knetbottichs (5) befestigt ist und an dem Oberteil (2) ein Knetwerkzeug (15) und ein das Knetwerkzeug (15) antreibender Antrieb sowie ein Deckel (4) zum Verschließen des Knetbottichs (5) gehalten sind, und wobei die der Tropfschutz (14) der Tropfschutzvorrichtung (13) zwischen einer ein- und ausgeschwenkten Position mittels eines Schwenkantriebs (18) verschwenkbar ist, und die Tropfschutzvorrichtung (13) eine Sicherheitskupplung (16) umfasst, und das Verfahren die folgende Schritte aufweist:
a) Nach Beendigung eines Knetvorgangs Herausbewegen des Knetwerkzeugs (15) aus dem Knetbottich (5) und danach Einschwenken des Tropfschutzes (14) unterhalb des Knetwerkzeuges (15), derart, dass von dem Knetwerkzeug (15) herabtropfender Nahrungsmittelteig aufgefangen wird,
b) Entfernen des Bottichwagens (7) aus der Knetmaschine (1),
c) Für den Fall das sich ein Hindernis im Schwenkbereich des Tropfschutzes (14) beim Ein-und/oder Ausschwenken befindet, Durchrutschen der Sicherheitskupplung (16) und Unterbrechen der Drehmomentübertragung vom Schwenkantrieb (16) auf den Tropfschutz (14).

8. Verfahren nach Anspruch 7, **dadurch gekennzeichnet, dass** das Verfahren die folgenden Schritte umfasst:
- Einbringen eines Bottichwagens (7) in die Knetmaschine (1) und danach Ausschwenken des Tropfschutzes (14) aus dem Bereich des Bottichwagens (7) heraus in eine Endposition, wobei in der Endposition der Tropfschutz (14) seitlich neben dem Unterteil (3) der Knetmaschine (1) angeordnet ist.

9. Verfahren nach Anspruch 7 oder 8, **dadurch gekennzeichnet, dass** das Ein- und Ausschwenken des Tropfschutzes (14) in einer horizontalen Ebene erfolgt.

10. Verfahren nach einem der vorhergehenden Ansprüche 7 bis 9, **dadurch gekennzeichnet, dass** der Überlastfall mittels Sensor detektiert wird und im Überlastfall der Schwenkantrieb (16) dazu angesteuert wird, die Drehrichtung umzukehren.
